# EUROPÄISCHE PATENTANMELDUNG

(11) **EP 0 923 234 A2**
(43) Veröffentlichungstag der Anmeldung: **16.06.1999**
(21) Anmeldenummer: 98204177.4
(22) Anmeldetag: 08.12.1998
(51) Int. Cl.: H04N 5/262

(54) **Anordnung zur Verarbeitung von Video-Daten**

(30) Priorität: 12.12.1997 DE 19755272
(71) Anmelder: Philips Patentverwaltung GmbH, 22335 Hamburg (DE); Koninklijke Philips Electronics N.V., 5621 BA Eindhoven (NL)
(72) Erfinder: Hasenzahl, Sieghard, Philips Patentverwaltung GmbH, 22335 Hamburg (DE); Seitz, Martin, Philips Patentverwaltung GmbH, 22335 Hamburg (DE); Rüffer, Peter, Philips Patentverwaltung GmbH, 22335 Hamburg (DE); Maas, Elmar, Philips Patentverwaltung GmbH, 22335 Hamburg (DE); Ernst, Rolf, Philips Patentverwaltung GmbH, 22335 Hamburg (DE)
(74) Vertreter: von Laue, Hanns-Ulrich, Dipl.-Ing.

(57) **Zusammenfassung**

Für eine Anordnung (1) zum Verarbeiten von digitalen Video-Daten ist für eine mögliche Echtzeitverarbeitung und für eine universelle Einsatzmöglichkeit der Anordnung vorgesehen, daß die Anordnung (1) wenigstens zwei parallel arbeitende digitale Signalprozessoren (DSP) (3, 5, 6) aufweist, die programmgesteuert jeweils auf zugeordnete Video-Daten zugreifen, diese einem Rechenprozeß unterwerfen und als bearbeitete Video-Daten wieder ausgeben.

## Beschreibung

Die Erfindung betrifft eine Anordnung zum Verarbeiten von digitalen Video-Daten.

Insbesondere in Fernsehstudios werden derartige Anordnungen verwendet, um digitale Video-Signale zu übertragen, zwischen diesen überzublenden, diese aufzubereiten, zu speichern, farbzustanzen und Ähnliches. Hierbei wird Hardware eingesetzt, die für den jeweiligen Verwendungszweck bestimmt ist und für diesen ausgelegt ist. Dies bedeutet, daß die jeweilige Hardware, also die Elemente einer Anordnung zum Verarbeiten von Video-Daten, nur für bestimmte Verwendungszwecke einsetzbar sind und im übrigen nicht nutzbar sind.

Es ist Aufgabe der Erfindung, eine Anordnung anzugeben, die in der Lage ist, Video-Daten in Echtzeit zu verarbeiten und die hardware-unabhängig vom jeweiligen Verwendungszweck ist.

Diese Aufgabe wird erfindungsgemäß dadurch gelöst, daß die Anordnung wenigstens zwei parallel arbeitende digitale Signalprozessoren (DSP) aufweist, die programmgesteuert jeweils auf zugeordnete Video-Daten zugreifen, diese einem Rechenprozeß unterwerfen und als bearbeitete Video-Daten wieder ausgeben.

Die digitalen Signalprozessoren, die je nach Rechenprogramm für alle Arten der Verarbeitung der Video-Daten einsetzbar sind, arbeiten also zeitlich nebeneinander an ihnen jeweils zugeordneten verschiedenen Video-Daten. Damit können beispielsweise verschiedene Bereiche eines Bildes zeitlich parallel verarbeitet werden, wodurch die Verarbeitungsgeschwindigkeit erhöht wird. Damit ist eine derartige Anordnung in der Lage, ein Bild in Echtzeit zu bearbeiten. Auch ist es möglich, daß die digitalen Signalprozessoren Bereiche eines Bildes verschiedenen Rechenprozessen unterwerfen.

Die universelle Verwendbarkeit dieser Anordnung wird auch dadurch gestärkt, daß die Verteilung der Daten zwischen den digitalen Signalprozessoren grundsätzlich frei ist und in Abhängigkeit des Rechenprozesses wählbar ist.

Durch eine Änderung des Rechenprogrammes für die digitalen Signalprozessoren ist eine schnelle Anpassung an gewünschte Arten der Verarbeitung der Video-Daten möglich.

Neben der Ausgestaltungsform nach Anspruch 2, bei der die digitalen Signalprozessoren verschiedene Bildpunkte eines Bildes oder jedenfalls eines Bildsignals bearbeiten und eine beschleunigte Verarbeitung des Bildsignals gestatten, ist als weitere vorteilhafte Ausgestaltung gemäß Anspruch 3 die Verarbeitung verschiedener Video-Daten aus verschiedenen Video-Signalen vorgesehen. Die Anordnung ist also so vielseitig einsetzbar, daß auch verschiedene Video-Signale durch die digitalen Signalprozessoren je nach Bedarf bearbeitet werden können.

Wie gemäß einer weiteren Ausgestaltung gemäß Anspruch 4 vorgesehen ist, können neben den digitalen Signalprozessoren auch Hardware-Einheiten vorgesehen sein, die entsprechend dem Stand der Technik nur für bestimmte Einsatzzwecke vorgesehen sind. Soll beispielsweise häufig ein Überblenden zwischen Signalen vorgenommen werden und ist hierfür eine spezielle Vorrichtung in der Anordnung vorgesehen, so kann Rechenzeit der DSP's gespart werden. Die Vorrichtung für die Überblendung ist hingegen relativ wirtschaftlich einsetzbar.

Es können neben den digitalen Signalprozessoren vorteilhaft auch Standardrechner vorgesehen sein, also beispielsweise Personal-Computer oder Workstations, welche einerseits die Verarbeitung von Standardsoftware gestatten. Das Einbinden derartiger Standardrechner in die Anordnung hat darüber hinaus den Vorteil, daß die Standardrechner zur Entwicklung von Software für die DSP's eingesetzt werden können. Diese Software kann vor Einsatz durch die DSP's auch in den Standardrechnern, wenn auch mit verminderter Geschwindigkeit, getestet werden.

Eine weitere Ausgestaltung der Erfindung gemäß Anspruch 5 hat den Vorteil, daß für den Datenaustausch zwischen den digitalen Signalprozessoren und gegebenenfalls weiteren in der Anordnung vorgesehenen Hardware-Modulen in einem anderen Datenformat folgen kann als die Anlieferung der externen Video-Daten. Damit kann einerseits das interne Datenformat optimal auf die Verarbeitung in der Anordnung zugeschnitten sein. Bei dem externen Datenformat kann es sich um ein komprimiertes Datenformat handeln; die Daten können auch diskontinuierlich an die Anordnung geliefert werden.

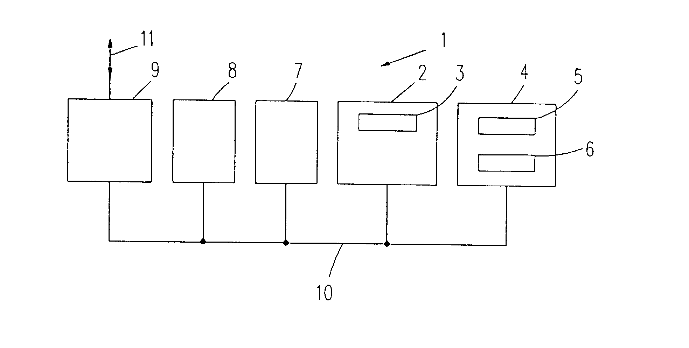

Nachfolgend wird anhand der Zeichnung ein Ausführungsbeispiel der Erfindung näher erläutert.

Die einzige Figur zeigt in Form eines Blockschaltbildes eine Anordnung 1 zum Verarbeiten von digitalen Video-Daten. Innerhalb der Anordnung sind verschiedene Module vorgesehen, so beispielsweise die Module 2 und 4.

Das Modul 2 weist einen digitalen Signalprozessor (DSP) 3 auf. Hierbei handelt es sich um einen Rechner, der auf eine Verarbeitung von digitalen Signalen, insbesondere Video-Signalen, zugeschnitten ist.

Das Modul 4 weist zwei digitale Signalprozessoren 5 und 6 auf.

Die digitalen Signalprozessoren 3, 5 und 6 sind so ausgelegt, daß sie, obwohl sie in verschiedenen Modulen 2 und 4 angeordnet sind, parallel Video-Daten verarbeiten.

In der Anordnung 1 gemäß der Figur ist ferner ein Modul 7 vorgesehen, bei dem es sich um einen sogenannten Standardrechner, beispielsweise einen Personal-Computer oder eine Workstation, handelt. Der Standardrechner 7 kann dazu eingesetzt werden, relativ langsame Prozesse innerhalb der Anordnung zu verarbeiten. Ferner gestattet es der Rechner auf relativ einfache Weise, Rechenprogramme für die digitalen Signalprozessoren 3, 5 und 6 zu entwickeln und zu testen. Auf diese Weise können die Rechenprogramme von dem Standardrechner 7 innerhalb der Anordnung 1 den digitalen Signalprozessoren 3, 5 und 6 zur Verfügung gestellt werden.

In der Anordnung 1 gemäß der Figur ist ferner eine Video-Hardware 8 vorgesehen, die einem bestimmten Einsatzzweck zugeordnet ist. Beispielsweise kann diese Video-Hardware 8 zum Überblenden zwischen verschiedenen Signalen, zum Farbstanzen oder für ähnliche Zwecke eingesetzt werden. Damit kann die Video-Hardware 8 die digitalen Signalprozessoren 3, 5 und 6 für einen vorgegebenen Einsatzzweck unterstützen.

Die Figur zeigt außerdem ein Video-Daten-Schnittstellenmodul 9, welches von außen über einen Datenbus 11 zugeführte Video-Daten bezüglich deren Format umsetzt. Die Daten werden aus dem Format, aus dem sie von außen über den Datenbus 11 angeliefert werden, mittels des Video-Daten-Schnittstellenmoduls 9 in ein internes Datenformat umgesetzt, mit dem sie auf den internen Datenbus 10 der Anordnung 1 eingespeist werden. Sie stehen damit innerhalb der Anordnung 1 in dem internen Datenformat den Modulen 2, 4, 7, 8 und 9 und damit auch den digitalen Signalprozessoren 3, 5 und 6 zur Verfügung.

Damit kann das interne Datenformat, mit dem die Daten auf dem internen Datenbus 10 verteilt werden, optimal an den Einsatzzweck der Anordnung 1 angepaßt sein. Bei dem externen Datenformat kann es sich beispielsweise um ein komprimiertes Datenformat handeln. Gegebenenfalls kann das externe Datenformat die Daten auch diskontinuierlich zur Verfügung stellen. Durch das Video-Daten-Schnittstellenmodul 9 wird gleichwohl eine kontinuierliche Datenverteilung innerhalb der Anordnung 1 erzielt.

Die Anordnung gemäß der Figur hat insbesondere den Vorteil, daß durch die digitalen Signalprozessoren 3, 5 und 6 durch deren parallele Rechenarbeit eine relativ schnelle Verarbeitung von Video-Daten erfolgen kann, so daß beispielsweise ein digitales Video-Signal in Echtzeit verarbeitet werden kann. Es können gegebenenfalls auch mehrere Video-Signale parallel verarbeitet werden. Bei der Verarbeitung der Video-Signale kann es sich beispielsweise um ein Mischen verschiedener Video-Signale, um ein Überblenden zwischen Video-Signalen, um eine Aufbereitung eines oder mehrerer Video-Signale, um ein Speichern eines oder mehrerer Video-Signale oder um ein Farbstanzen zwischen Video-Signalen handeln.

Die über den internen Datenbus 10 an die Module 2, 4, 7 und 8 gelieferten Daten werden nach der Verarbeitung der Daten durch diese Module wieder auf den Datenbus 10 gegeben und mittels des Video-Daten-Schnittstellenmoduls 9 wieder in das externe Datenformat umgesetzt. Sie werden dann auf den externen Bus 11 gegeben und somit in der verarbeiteten Form wieder zur Verfügung gestellt.

Neben der möglichen Echtzeitverarbeitung bietet die Anordnung 1 den Vorteil, daß sie universell einsetzbar ist. Die Rechenprogramme für die digitalen Signalprozessoren 3, 5 und 6 sind schnell austauschbar, so daß auch ein schneller Wechsel zwischen verschiedenen Einsatzzwecken möglich ist.

## Patentansprüche

1. Anordnung (1) zum Verarbeiten von digitalen Video-Daten, dadurch gekennzeichnet,
daß die Anordnung (1) wenigstens zwei parallel arbeitende digitale Signalprozessoren (DSP) (3, 5, 6) aufweist, die programmgesteuert jeweils auf zugeordnete Video-Daten zugreifen, diese einem Rechenprozeß unterwerfen und als bearbeitete Video-Daten wieder ausgeben.

2. Anordnung nach Anspruch 1, dadurch gekennzeichnet,
daß die digitalen Signalprozessoren (3, 5, 6) jeweils auf Bilddaten einzelner Bildpunkte oder benachbarter Bildpunkte zugreifen.

3. Anordnung nach Anspruch 1, dadurch gekennzeichnet,
daß die von den digitalen Signalprozessoren (3, 5, 6) bearbeiteten Video-Daten aus mehreren Video-Signalen stammen.

4. Anordnung nach Anspruch 1, dadurch gekennzeichnet,
daß in der Anordnung neben den digitalen Signalprozessoren ein oder mehrere Standardrechner (7) und/oder einem vorgegebenen Einsatzzweck zugeordnete Verarbeitungs-Hardware (8) vorgesehen sind.

5. Anordnung nach Anspruch 1, dadurch gekennzeichnet,
daß in der Anordnung neben den digitalen Signalprozessoren (3, 5, 6) wenigstens ein Video-Daten-Schnittstellenmodul (9) vorgesehen ist, welches der Anordnung (1) von außen in einem ersten Datenformat zur Verfügung gestellte Video-Daten in ein zweites, internes Datenformat umsetzt, in welchem der Datenaustausch innerhalb der Anordnung (1), insbesondere zwischen den digitalen Signalprozessoren (3, 5, 6), erfolgt.
